(19)

Europäisches Patentamt

European Patent Office

Office européen des brevets

(11) **EP 3 290 690 A1**

(12) **EUROPEAN PATENT APPLICATION**

(43) Date of publication:
**07.03.2018 Bulletin 2018/10**

(51) Int Cl.:
*F03D 7/02* (2006.01)     *F03D 7/04* (2006.01)

(21) Application number: **17186656.9**

(22) Date of filing: **17.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.08.2016 JP 2016167481**

(71) Applicant: **Hitachi, Ltd.
Tokyo 100-8280 (JP)**

(72) Inventors:
• **KONDOU, Shinichi
Tokyo, 100-8280 (JP)**

• **NAKATANI, Masachika
Tokyo, 100-8280 (JP)**
• **ITO, Tomomichi
Tokyo, 100-8280 (JP)**
• **SAEKI, Mitsuru
Tokyo, 100-8280 (JP)**
• **SAKAMOTO, Kiyoshi
Tokyo, 100-8280 (JP)**

(74) Representative: **MERH-IP Matias Erny Reichl
Hoffmann
Patentanwälte PartG mbB
Paul-Heyse-Strasse 29
80336 München (DE)**

(54) **WIND FARM OR CONTROL METHOD OF WIND FARM**

(57)     The purpose is to provide a wind farm that is capable of increasing power generation output or a control method of a wind farm.

In order to solve the problems, a wind farm 100 according to the present invention includes plural wind power generation apparatuses 10 each of which has: blades; a nacelle that supports the blades to make the blades rotatable; and a tower that supports the nacelle to make the nacelle rotatable in its yaw movement, the wind farm 100 including a control device 40 that, with the use of the wind condition information of the wind farm, the disposition information of first wind power generation apparatuses 10a, 10b that are stopping power generation and the disposition information of second wind power generation apparatuses 10c, 10d, 10e that are located on the leeward side of the first wind power generation apparatuses among all the wind power generation apparatuses, and the design information of the first wind power generation apparatuses, outputs a yaw angle designation value to the first wind power generation apparatuses or the second wind power generation apparatuses so that the generated electric energy of the wind farm becomes large.

FIG. 1

EP 3 290 690 A1

## Description

Technical Field

The present invention relates to wind farms or control methods of wind farms.

Background Art

Considerable time has passed since a concern arose that fossil fuels such as petroleum would be depleted in the near future, and additionally the emissions reduction of $CO_2$ has been an urgent problem to be solved throughout the world in order to combat warming problems in the global environment. In order to solve these problems, the introduction of power generations utilizing natural energies such as solar power generation and wind power generation have been spreading throughout the world as methods of power generations that do not use fossil fuels and do not emit $CO_2$ as well.

In keeping with this trend, the number of groups of wind power generation apparatuses (wind farms), each of which includes two or more wind power generation apparatuses, has been also increasing. In association with the increase of the number of introductions of wind power generation apparatuses and the request that the wind power generation apparatuses should play a role of a key power supply, it has been desired that the power generation output generated by the entirety of wind farms should be increased. However, when a wind farm is installed, because there is the limitation of the installation area of the wind farm and the like, sufficient distances among wind power generation apparatuses cannot be secured, and therefore the wind power generation apparatuses are installed rather near to each other in many cases. In addition, in the case where a wind farm becomes large-scaled, and the number of wind power generation apparatuses in the wind farm is increased, the number of wind power generation apparatuses that stop power generation owing to regular maintenances or failures is increased. If the distances among the wind power generation apparatuses are sufficiently large, it is unnecessary to take the leeward effects of winds that pass through the vicinities of wind power generation apparatuses that are stopping power generation into consideration. However, in the case where the distances among wind power generation apparatuses become short to some extent, wind power generation apparatuses that are stopping power generation becomes obstacles to winds, and wind power generation apparatuses located leeward come under the effects of winds that pass through the vicinities of the wind power generation apparatuses that are stopping power generation, which brings about the reduction of the electric power output generated by the wind farm. In most of sites, the positional relations bring about the leeward effects owing to the limitations of the installation space.

In order to cope with this problem, Patent Literature 1 proposes a technique in which the yaw angle of a wind power generation apparatus that stops power generation is controlled so that the rotation plane of the blades of the wind power generation apparatus is always disposed in parallel with the direction of a wind.

Citation List

Patent Literature

Patent Literature 1: WO2015/136687

Summary of Invention

Technical Problem

Winds that pass through wind power generation apparatuses that are stopping power generation bring about various effects on wind power generation apparatuses located leeward depending on the shapes of the wind power generation apparatuses that are stopping power generation, the disposition of the wind power generation apparatuses located leeward, the distances among the wind power generation apparatuses located leeward, and the like as well as the directions of the winds. Therefore, it is conceivable that the above method, in which the yaw angle of a wind power generation apparatus that is stopping power generation is controlled so that the rotation plane of the blades of the wind power generation apparatus is always disposed in parallel with the direction of a wind, does not provide the maximum power generation output generated by the relevant wind farm because the yaw angle disposed in parallel with the direction of the wind brings about a larger effect of the wind than the yaw angle that is set differently depending on the shapes of the nacelle and the hub of the wind power generation apparatus.

The present invention was achieved with the abovementioned problems in mind, and one of the objects of the present invention is to provide a wind farm that is capable of increasing power generation output or a control method of a wind farm.

Solution to Problem

In order to solve the abovementioned problem, a wind farm according to the present invention that rotates on receiving a wind is a wind farm including plural wind power generation apparatuses each of which having: blades; a nacelle that supports the blades to make the blades rotatable; and a tower that supports the nacelle to make the nacelle rotatable in its yaw movement. The wind farm further includes a control device that, with the use of the wind condition information of the wind farm, the disposition information of first wind power generation apparatuses that are stopping power generation and the disposition information of second wind power generation apparatuses that are located on the leeward side of the first wind power generation apparatuses among all the wind power generation apparatuses, and the design information of the first wind power generation apparatuses, outputs a yaw angle designation value to the first wind power generation apparatuses or the second wind power generation apparatuses so that the generated electric energy of the wind farm becomes large.

Furthermore, a control method for controlling a wind farm according to the present invention is a control method for controlling a wind farm including plural wind power generation apparatuses each of which has: blades that rotate on receiving a wind; a nacelle that supports the blades to make the blades rotatable; and a tower that supports the nacelle to make the nacelle rotatable in its yaw movement. The control method is a method in which, in consideration of an effect on the attenuation of a wind that is received by second wind power generation apparatuses located on the leeward side of first wind power generation apparatuses that are stopping power generation using disposition information showing relations among the plural wind power generation apparatuses, design information and wind condition information about the plural wind power generation apparatuses, the yaw angle designation value of the first wind power generation apparatuses or the yaw angle designation value of the second wind power generation apparatuses is determined when electric power generation is stopped so that the generated electric energy of the wind farm becomes large.

Advantageous Effects of Invention

According to the present invention, the power generation output of a wind farm can be boosted up by properly adjusting the operation parameters of a wind power generation apparatus that is stopping power generation in the wind farm.

Brief Description of Drawings

[0011]

　Fig. 1 is a diagram showing the configuration of a wind farm according to a first embodiment of the present invention.
　Fig. 2(a) is a diagram showing a concept that the yaw angle of a wind power generation apparatus decreases a wind speed input into a wind power generation apparatus located leeward in the case of the first embodiment not being applied.
　Fig. 2(b) is a diagram showing a concept that the yaw angle of a wind power generation apparatus decreases a wind speed input into a wind power generation apparatus located leeward in the case of the first embodiment being applied.
　Fig. 3 is the control block diagram of a wind power generation apparatus according to the first embodiment of the present invention.

　Fig. 4(a) is a diagram for explaining a technique according to the first embodiment of the present invention, in which an effect brought about by a wind power generation apparatus that is stopping power generation on the attenuation of a wind is calculated, and the technique makes a vertical projection area small.
　Fig. 4(b) is a diagram for explaining a technique according to the first embodiment of the present invention, in which an effect brought about by a wind power generation apparatus that is stopping power generation on the attenuation of a wind is calculated, and the technique makes a vertical projection area large.
　Fig. 5 is an example of a table used for determining a yaw angle designation value in the first embodiment of the present invention.
　Fig. 6 is a flowchart showing a procedure for determining the yaw angle designation value according to the first embodiment of the present invention.
　Fig. 7 is a diagram showing the configuration of a wind farm according to a second embodiment of the present invention.
　Fig. 8 is the control block diagram of a wind farm control device according to the second embodiment of the present invention.
　Fig. 9 is a diagram showing timings on which the yaw angle of a wind power generation apparatus according to a third embodiment of the present invention is changed.
　Fig. 10 is a diagram showing timings on which a yaw angle according to a fourth embodiment of the present invention is determined using weather forecast information.
　Fig. 11 is a control block diagram for controlling a yaw angle and a pitch angle according to a fifth embodiment of the present invention.
　Fig. 12 (a) is a graph showing examples of the generated electric energy of a wind farm and the load fatigue of a wind power generation apparatus in the case of a sixth embodiment of the present invention not being applied.
　Fig. 12 (b) is a graph showing examples of the generated electric energy of a wind farm and the load fatigue of the wind power generation apparatus in the case of the sixth embodiment of the present invention being applied.

Description of Embodiments

Hereinafter, preferable embodiments for carrying out the present invention will be explained with reference to the accompanying drawings.

First Embodiment

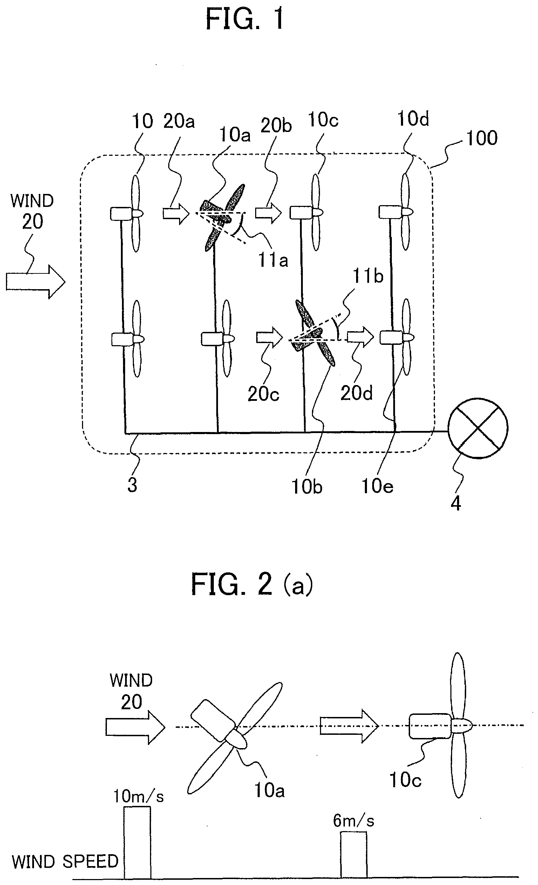

Fig. 1 is the configuration diagram of a wind farm 100 according to this embodiment. In Fig. 1, each wind power generation apparatus 10 generates electric power on receiving the energy of a wind 20. Each wind power generation apparatus includes: blades that rotate on receiving a wind; a nacelle that supports the blades via a main axis and the like to make the blades rotatable; and a tower that supports the nacelle to make the nacelle rotatable in its yaw movement. Individual wind power generation apparatuses 10 are connected to each other via a power transmission line 3, and supply generated electric power to a power system 4. If there are wind power generation apparatuses 10a and 10b that are stopping power generation among the wind power generation apparatuses 10 owing to maintenance, failure, or the like, the wind power generation apparatuses 10a and 10b that are stopping power generation become obstacles to incoming winds 20a and 20c, and there is a possibility that the generated electric energies generated by wind power generation apparatuses 10c, 10d, and 10e that are located leeward and generate electric power using winds 20b and 20d passing through the wind power generation apparatuses 10a and 10b are reduced. To cope with this problem, using the wind direction/wind speed measurement values that are included in wind condition information measured by wind direction/wind speed meters, measured values measured by yaw sensors (wherein these meters and sensors are installed in the wind power generation apparatuses that are stopping power generation), and disposition information and design information about the wind power generation apparatuses 10 in the wind farm 100, the yaw angles 11a and 11b of the wind power generation apparatuses 10a and 10b that are stopping power generation are controlled so that the attenuations of the incoming winds 20a and 20c are reduced, and thereby the wind speeds of the winds flowing into the wind power generation apparatuses located leeward increase, with the result that it becomes possible to increase the generated electric energy of the wind power generation apparatuses located leeward.

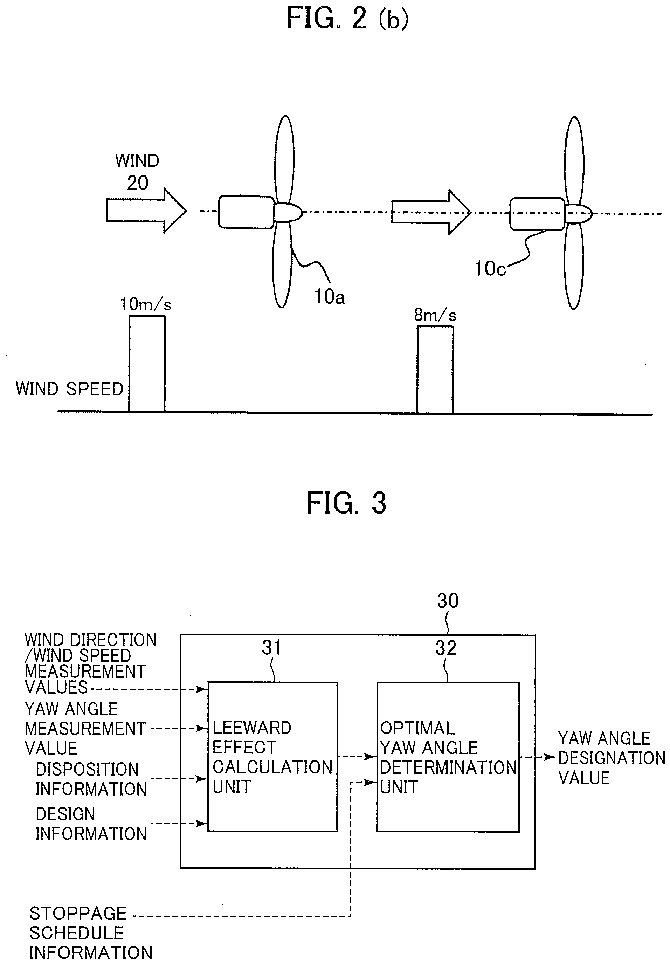

Figs. 2 are diagram showing a concept that the yaw angle of a wind power generation apparatus that is stopping power generation decreases the wind speed input into a wind power generation apparatus located leeward. In (a), the case of the control of the present invention not being applied is shown, and if the wind speed of the wind 20 that blows the wind power generation apparatus 10a that is stopping power generation is 10 m/s, because the yaw angle of the wind power generation apparatus 10a that is stopping power generation is fixed to an improper position, the wind speed of a wind that passes through the wind power generation apparatus 10a and blows the wind power generation apparatus 10c located on the leeward side of the wind power generation apparatus 10a is attenuated to 6 m/s. In (b), the case of the control of the present invention being applied is shown, and by controlling the value of the yaw angle of the wind speed of the wind 10a that is stopping power generation so that the resistance against the wind 20 becomes small, the wind speed of the wind blowing the wind power generation apparatus 10c located leeward is 8 m/s, which is larger than the wind speed in the case of (a). In this way, controlling wind power generation apparatuses that are stopping and do not contribute to generating electric power makes it possible to increase the generated electric energy of the entirety of the wind farm.

Fig. 3 is the control block diagram of a wind power generation apparatus according to this embodiment. A wind power generation control device 30 is installed in each wind power generation apparatus in the wind farm. The wind power generation control device 30 includes an input unit into which the wind direction/wind speed measurement values of the wind power generation apparatus; the yaw angle measurement values thereof; disposition information and design information (information about the shapes and the like of structural members such as rotors, nacelles, towers, and the like) about individual wind power generation apparatuses in the wind farm are input, and the wind power generation control device 30 further includes: a leeward effect calculation unit 31 that calculates an effect on the attenuation of a wind that is received by a wind power generation apparatus located leeward; and an optimal yaw angle determination unit 32 that determines an optimal yaw angle designation value at the time of stopping power generation using the result of calculating the effect, which is provided by the leeward effect calculation unit 31, on the attenuation of the wind that is received by the wind power generation apparatus located leeward, and stoppage schedule information about wind power generation apparatuses. There are one case where an optimal yaw angle is determined at the time of stopping power generation and locked, and another case where yaw control is executed even during the time period of the stoppage of power generation. The wind direction/wind speed measurement value and the yaw angle measurement value input into the leeward effect calculation unit 31 are measurement values measured for each instant time, while the disposition information and the design information are obtained by referring to information stored in advance in a database. A wind farm control unit includes such a database internally, or obtains information by referring to an outside source.

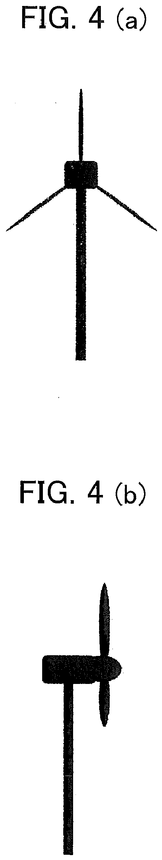

Figs. 4 are diagram for explaining a technique according to this embodiment in which an effect brought about by a wind power generation apparatus that is stopping power generation on the attenuation of a wind that is received by a wind power generation apparatus located leeward is calculated. Here, it will be assumed that the attenuation of the wind that passes through the wind power generation apparatus that is stopping power generation is proportional to the vertical projection area of the wind power generation apparatus that is stopping power generation viewed from the windward side. This projection area can be determined using wind condition information (including the wind direction/wind speed measurement values and the like), the disposition information of wind power generation apparatuses, and the design information of the wind power generation apparatuses. Figs. 4(a) and (b) respectively show vertical projection figures viewed from the windward in the case where the yaw angle of the wind power generation apparatus that is stopping power generation is changed in two ways, by comparing the areas of these vertical projection figures with each other, it can be judged that the yaw angle used in (a) gives a less attenuation of the wind than the yaw angle used in (b). By obtaining vertical projection areas for some wind directions in advance using the design drawings of the wind power generation apparatus, the value of the yaw angle that makes the effect on the attenuation of the wind small can be calculated. In the case of the shape of a wind power generation apparatus according to this embodiment, under the condition of the dispositions of a wind power generation system and the wind directions shown in Fig. 1, the yaw angles being 0° of the wind power generation apparatuses 10a and 10b, which are stopping power generation, are yaw angles that provide the smallest effects on the attenuations of winds respectively. Therefore, yaw angle designation values that make the effects on the attenuations of the winds the smallest respectively are calculated as yaw angle values that make the projection areas of the windward wind power generation apparatuses the smallest respectively when the windward wind power generation apparatuses that are stopping power generation are viewed from the windward side (in the wind direction).

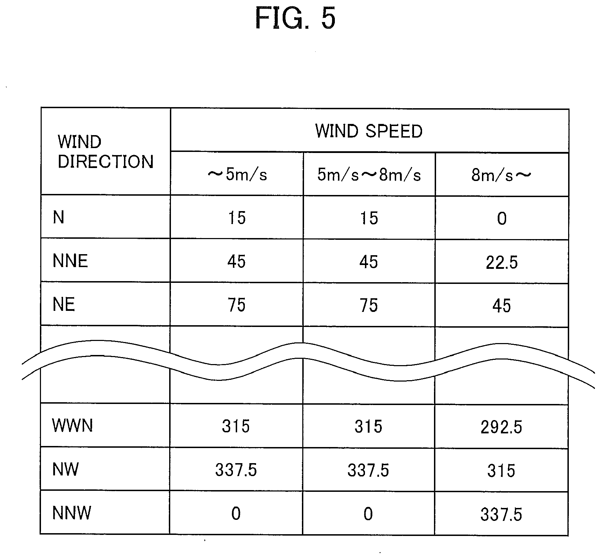

Fig. 5 is an example of a table used for determining a yaw angle designation value of a wind power generation apparatus that is stopping power generation according to this embodiment. The results of the calculation of the effects on the attenuations of winds of the wind power generation apparatuses located leeward using vertical projection areas shown in Fig. 4 are stored in a table, or the yaw angles of wind power generation apparatuses themselves or the yaw angles of wind power generation apparatuses located leeward that are optimal for each wind direction and for each wind speed are calculated in advance using means such as fluid analysis, and the results of the calculation are stored in the table. It is conceivable that this table is stored in the abovementioned database or in another database. It is possible for the optimal yaw angle determination unit to determine a yaw angle designation value with reference to this table. In addition, because even wind power generation apparatuses located considerably leeward are affected at a time when a strong wind is blowing, setting an optimal yaw angle in accordance not only with the wind direction but also with the wind speed makes it possible to increase the generated electric energy of the entirety of a wind farm.

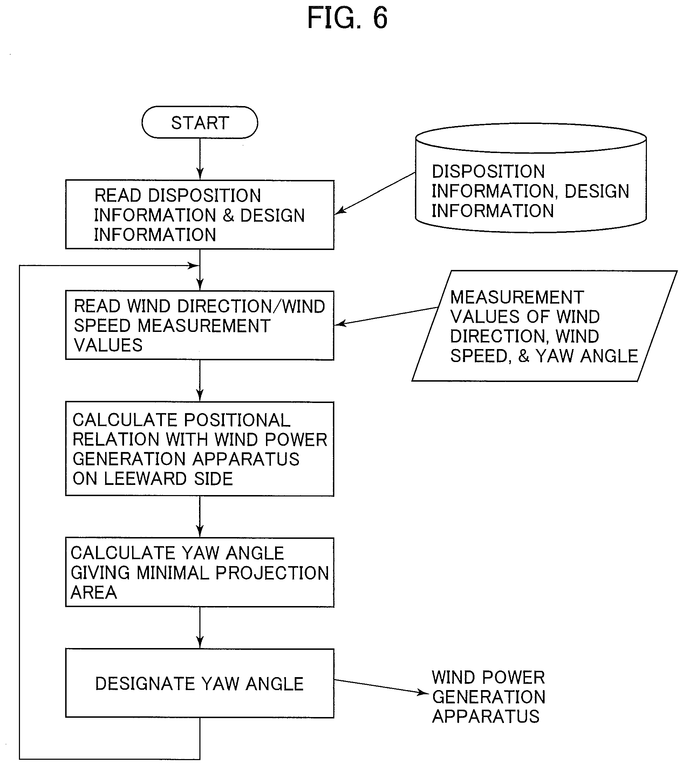

Fig. 6 is a flowchart showing a procedure for determining the yaw angle designation value of a wind power generation apparatus that is stopping power generation according to this embodiment. Disposition information about wind power generation apparatuses and design information including the shapes of the wind power generation apparatuses in a wind farm that are stored in a database in advance are input into the leeward effect calculation unit 31 of the wind power generation control device 30, and further the wind direction/wind speed measurement values and the measurement value of the yaw angle measured in the wind power generation apparatus are input into the leeward effect calculation unit 31. Using the disposition information and the wind direction/wind speed measurement values among the input information, the positional relation with wind power generation apparatuses located leeward is calculated. Using the positional relation with the wind power generation apparatuses located leeward, yaw angles that make projection areas on the wind power generation apparatuses the minimum are calculated. The calculated yaw angles are output to the wind power generation apparatuses 10a and 10b that are stopping power generation. Because the wind direction/wind speed measurement values and the like momentarily vary, the step of reading the measurement values is repeated again after the yaw angle designation values are output to continue the flow.

In this embodiment, although it has been presupposed that a yaw angle that makes the projection area the minimum is calculated, it is not always indispensable that the projection area is the minimum, and a certain degree of effect can be expected if the yaw angle designation value is set to a position that makes the projection area smaller than a projection area obtained when the abovementioned control is not taken at all. It is especially preferable that the projection area should be made the minimum, of course.

Second Embodiment

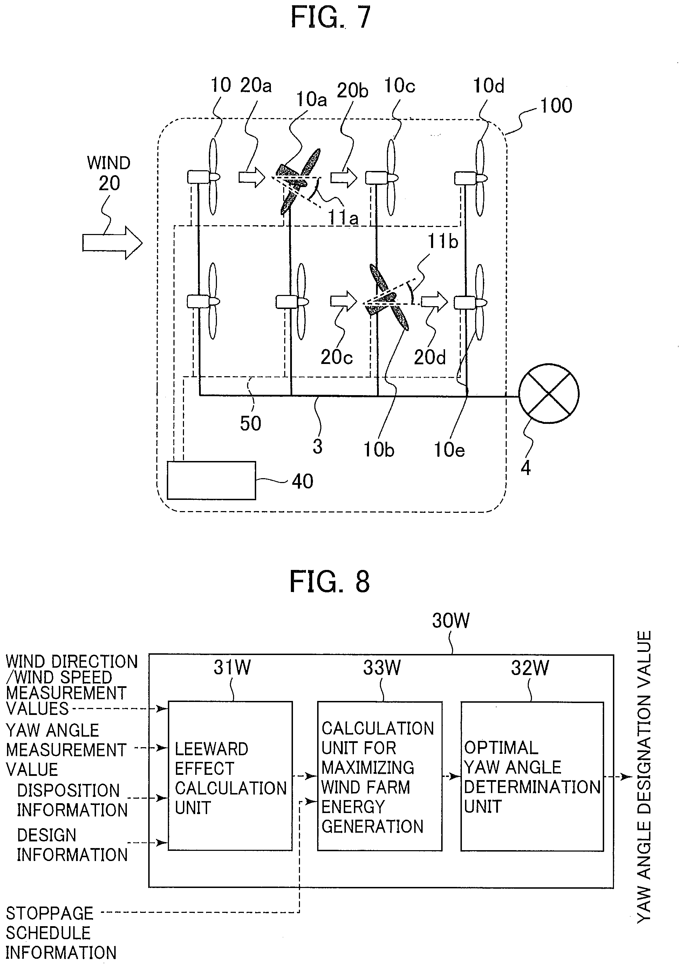

Fig. 7 is a configuration diagram showing a case where a wind farm control device, which is installed at least one for one wind farm, designates the yaw angle of a wind power generation apparatus that is stopping power generation in the first embodiment. In the figure, each wind power generation apparatus 10 is connected to the wind farm control device 40 via communication means 50. For example, the yaw angle measurement value, wind direction/wind speed measurement values, generated electric energy, and operation/stoppage information of each wind power generation apparatus 10 are sent to the wind farm control device 40 from each wind power generation apparatus 10. A yaw designation value, for example, is sent to each wind power generation apparatus 10 from the wind farm control device 40. With such a configuration adopted, in the case where there are plural wind power generation apparatuses that are stopping power generation in a wind farm, or in the case where the distributions of wind directions and wind speeds in the wind farm are not uniform, it becomes possible to control the yaw angles of the wind power generation apparatuses that are stopping power generation so that the generated electric power of the entirety of the wind farm is increased.

Fig. 8 is the control block diagram of a wind farm control device 30W according to this embodiment. A difference from a wind power generation control device 30 installed for each wind power generation apparatus in Fig. 3 is that the wind farm control device 30W includes a calculation unit for maximizing wind farm energy generation 33W that calculates the yaw angles of wind power generation apparatuses that are stopping power generation in a wind farm so that the generated electric power of the entirety of the wind farm becomes the maximum. The calculation unit for maximizing wind farm energy generation 33W individually controls the yaw angles of plural wind power generation apparatuses that are running, the yaw angle of at least one wind power generation apparatus that is stopping power generation, or all the above yaw angles, in the wind farm, in order to calculate a combination of these yaw angles so that the generated electric power of the entirety of the wind farm become the maximum. As one example of calculation methods of the abovementioned combination, there is a method in which information about the measured wind directions and wind speeds and information about wind power generation apparatuses that are stopping power generation are input into simulation models that simulate the disposition of the wind power generation apparatuses and the shapes of the individual wind power generation apparatuses in the wind farm, and the yaw angles of the individual wind power generation apparatuses are calculated so that an object function represented by Expression (1) becomes the maximum using an exploratory calculation technique.

$$PWF = \Sigma(P(n)) \Rightarrow maximum \cdots (1),$$

where PWF represents the generated electric power of the entirety of a wind farm. P(n) represents the generated electric power of nth wind power generation apparatus in the wind farm, and P(n) is given by Expression (2).

$$P(n) = Cp(n) \times (1/2) \times \rho \times A \times V^3 \cdots (2),$$

where Cp represents the power coefficient of a wind power generation apparatus, ρ represents an air density, A represents a wind receiving area, and V represents a wind speed.

As the exploratory calculation technique, a genetic algorithm can be used, for example.

Furthermore, other than the above exploratory calculation technique, there is also another method in which, while the generated electric power of the entirety of a wind farm is being measured, the yaw angles of wind power generation apparatuses that are stopping power generation are changed sequentially by the wind farm control device 30W, and with reference to the variation of the generated electric power caused by the sequential change, the yaw angles are changed so that the generated electric power is increased.

In addition, the wind direction/wind speed measurement values can be obtained not only using wind direction/wind speed meters mounted on the wind power generation apparatuses but also using wind direction/wind speed observation devices inside or in the vicinity of the wind farm.

Third Embodiment

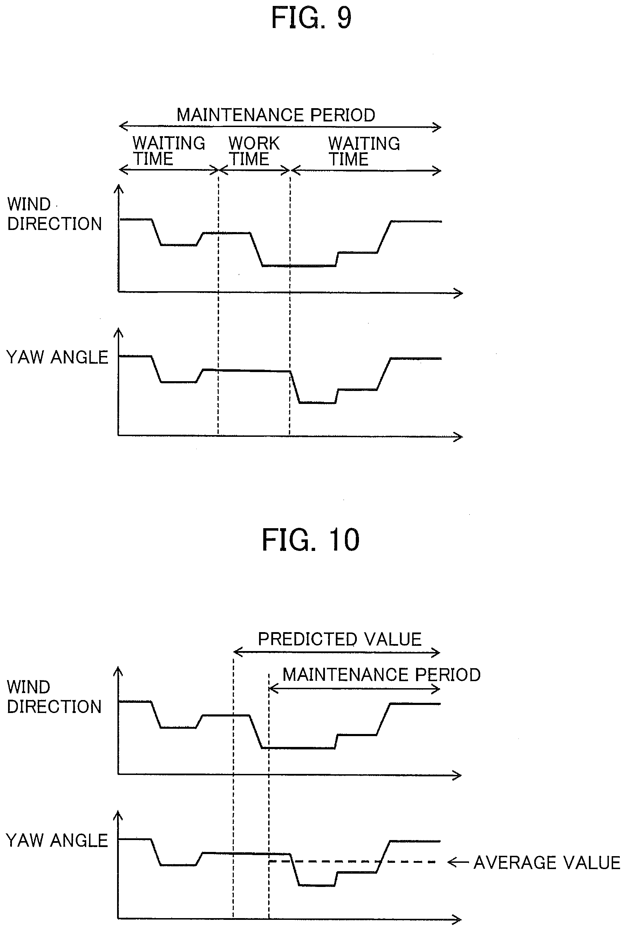

Fig. 9 shows an embodiment in which, during time periods other than a work time such as a maintenance time for a wind power generation apparatus that is stopping power generation in the first or second embodiment, the yaw angle of the wind power generation apparatus is changed in accordance with a wind direction. In a wind power generation apparatus that is stopping power generation owing to its maintenance or failure, usually the yaw angle of the wind power generation apparatus is set to a fixed value during its maintenance period or during a time period for the recovery of its failure. Although the yaw angle of a wind power generation apparatus that is stopping power generation is designated so that the generated electric power of a wind power generation apparatus located leeward is increased in the first and second embodiments, this embodiment is characterized in that the yaw angle is changed on a timing of the wind direction changing during the time period of the stoppage of power generation. In this case, the yaw angle is not changed for the sake of safety during a time period during which work is performed inside the tower or nacelle of the relevant wind power generation apparatus. With this, even in a wind farm where a wind direction frequently changes, the effect of the increase of generated electric energy according to the present invention can be expected.

Fourth Embodiment

Fig. 10 shows an embodiment example in which the yaw angle of a wind power generation apparatus that is stopping power generation is set in accordance with weather forecast information such as a window direction and a wind speed in the first or second embodiment. In the case where the yaw angle can be controlled even in the maintenance period of the wind power generation apparatus as is the case with the third embodiment, the yaw angle can be changed in accordance with a measured wind direction and a wind speed, but a case where the yaw angle cannot be changed such as a case where the maintenance is performed on components regarding the control of the yaw angle is also conceivable. In such a case, after a value of the yaw angle that makes the generated electric energy the maximum corresponding to the average or most values of a wind direction and a wind speed during a maintenance period is determined in advance with the use of the predicted values of the wind direction and the wind speed, the yaw angle can be set at the time of stopping power generation.

Fifth Embodiment

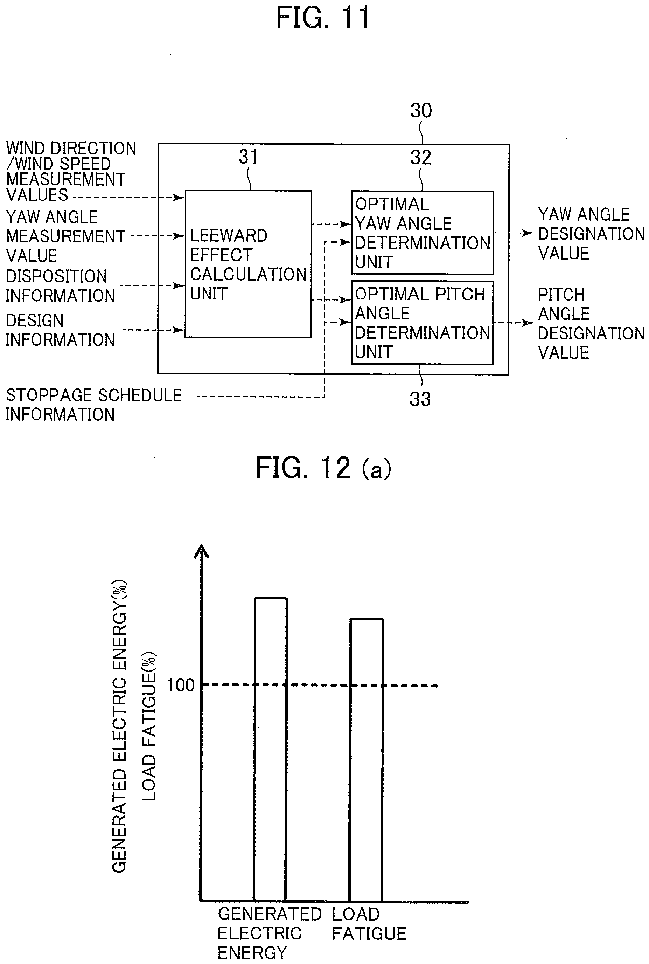

Fig. 11 is a control block diagram of an embodiment in which, in each of the above-described embodiments, not only the yaw angle of a wind power generation apparatus that is stopping power generation but also the pitch angle thereof is controlled. Usually, in the case where a wind power generation apparatus is stopped from generating electric power owing to maintenance or failure, the pitch angle is fixed at a feather position where the rotation torque of the blades of the wind power generation apparatus is not generated even if the wind power generation apparatus squarely receives a wind. However, in the present invention, there is a possibility that the attenuation of the wind is made smaller by fixing the pitch angle at a position other than the feather position with reference to the relation between the wind power generation apparatus that is stopping power generation and wind power generation apparatuses located leeward, the shape of the vertical projection area of the wind power generation apparatus, and the like. Therefore, by setting either the yaw angle or the pitch angle or both of the wind power generation apparatus that is stopping power generation at positions that make the attenuation of the wind small, there is a possibility that the generated electric power of the relevant wind farm is increased.

Sixth Embodiment

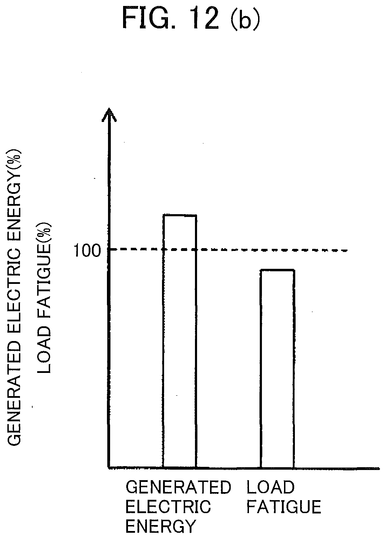

Figs. 12 are diagrams showing an example of generated electric energy of a wind farm and an example of load fatigue of a wind power generation apparatus caused by a wind. In each of the above-described embodiments, it is conceivable that, in the case where the generated electric power of a wind farm is increased by controlling the yaw angle of a wind power generation apparatus that is stopping power generation or both yaw angle and pitch angle thereof, the load fatigue of the wind power generation apparatus exceeds 100 % depending on the relation between the yaw angle/pitch angle and the wind direction/wind speed as shown in (a) when the load fatigue of the wind power generation apparatus in the case of the control of the present invention not being executed is represented by 100 %. If the load fatigue of a wind power generation apparatus increases, there arises a concern that the maintenance period of the wind power generation apparatus becomes short or the failure of the wind power generation apparatus easily occurs. In this case, it is possible to control the yaw angle or the pitch angle so that the load fatigue decreases by reducing the increase effect of the generated electric energy as shown in (b). In the case where this function is installed in the calculation unit for maximizing wind farm energy generation 33W explained in the second embodiment, not only maximizing the generated electric energy is intended but also, while increasing the generated electric power is intended, reducing the load fatigue is intended at the same time by the calculation unit for maximizing wind farm energy generation 33W. This can be realized by obtaining the increasing amount of the generated electric energy of wind power generation apparatuses located leeward and the change of the load fatigue of a wind power generation apparatus that is stopping power generation in advance using the yaw angles and pitch angles of wind power generation apparatuses against wind directions by means of fluid analysis or the like. It is possible that the relation between the increasing amount of the generated electric energy of the wind power generation apparatuses located leeward and the level of the change of the load fatigue of the wind power generation apparatus that is stopping power generation using the variations of the yaw angles and pitch angles of wind power generation apparatuses against wind directions is calculated in advance, and can be stored in a memory device such as a database.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

List of Reference Signs

10···Wind power generation apparatus, 20···Wind, 30···Wind power generation control device, 40···Wind farm control device, 50···Communication means, 100···Wind farm

**Claims**

1. A wind farm including a plurality of wind power generation apparatuses (10) each of which has: blades that rotate on receiving a wind; a nacelle that supports the blades to make the blades rotatable; and a tower that supports the nacelle to make the nacelle rotatable in its yaw movement,
   the wind farm (100) comprising a control device (40) that, with the use of the wind condition information of the wind farm (100), the disposition information of first wind power generation apparatuses that are stopping power generation and the disposition information of second wind power generation apparatuses that are located on the leeward side of the first wind power generation apparatuses among all the wind power generation apparatuses (10), and the design information of the first wind power generation apparatuses, outputs a yaw angle designation value to the first wind power generation apparatuses or the second wind power generation apparatuses so that the generated electric energy of the wind farm (100) becomes large.

2. The wind farm according to claim 1, wherein the control device (40) includes an input unit into which wind direction measurement values, yaw angle measurement values, disposition information showing the positional relations among wind power generation apparatuses in the wind farm, and the design information of the wind power generation apparatuses (10) included in the wind farm (100) are input, and
the control device (40) further includes: a leeward effect calculation unit that calculates an effect brought about by the first wind power generation apparatus on the attenuation of a wind that is received by the second wind power generation apparatus; and a yaw angle determination unit that determines a yaw angle designation value during the time period of the stoppage of power generation using the result of calculating the effect on the attenuation of the wind that is received by the second wind power generation apparatus.

3. The wind farm according to claim 1 or claim 2, wherein the control unit calculates a yaw angle designation value that minimizes the effect brought about by the first wind power generation apparatuses on the attenuation of the wind that is received by the second wind power generation apparatus as a yaw angle that minimizes a projection area of the first wind power generation apparatuses viewed from the windward side.

4. The wind farm according to claim 3, wherein the projection area is determined with reference to the wind condition information, the disposition information, and the design information.

5. The wind farm according to claim 3 or claim 4, further comprising a database storing information about a yaw angle of the first wind power generation apparatuses or the second wind power generation apparatuses that is created for each wind direction, and is also created so that the generated electric energy of the second wind power generation apparatuses is maximized in consideration of the projection area.

6. The wind farm according to any of claim 1 to claim 5, wherein the control device (40) is a wind farm control device that controls the plurality of wind power generation apparatuses (10),
the wind farm control device (40) and the plurality of wind power generation apparatuses (10) are connected with communication means (50), and
the yaw angle measurement values, wind direction/wind speed measurement values, and generated electric energy of the wind power generation apparatuses (10), and the operation/stoppage information of the wind power generation apparatuses (10) are sent from the wind power generation apparatuses (10) to the wind farm control device (40) via the communication means (50), and at the same time yaw angle designation values are sent from the wind farm control device (40) to the plurality of wind power generation apparatuses (10) via the communication means (50).

7. The wind farm according to claim 6, wherein the wind direction/wind speed measurement values are obtained from a wind condition observation device installed inside or in the vicinity of the wind farm (100).

8. The wind farm according to claim 6 or claim 7, wherein the control device (40) includes a calculation unit for maximizing wind farm energy generation that calculates the yaw angle of the first wind power generation apparatuses so that the generated electric power of the entirety of the wind farm (100) becomes the maximum, and
the calculation unit for maximizing wind farm energy generation controls the yaw angle of at least one of the first wind power generation apparatuses and the yaw angle of the second wind power generation apparatuses individually to calculate a combination of the yaw angles that makes the generated electric power of the entirety of the wind farm (100) the maximum.

9. The wind farm according to claim 8, wherein at least one of the yaw angle of the first wind power generation apparatuses and the pitch angles of the blades of the first wind power generation apparatuses is controlled so that, while the generated electric power of the wind farm is increased, the load fatigue of at least some of the wind power generation apparatuses (10) caused by a wind (20) is decreased.

10. The wind farm according to any of claim 1 to claim 9, wherein the control device (40) controls the pitch angles of the blades of the first wind power generation apparatuses in addition to the yaw angle of the first wind power generation apparatuses.

11. The wind farm according to any of claim 1 to claim 10, wherein the yaw angle of the first wind power generation apparatuses is changed in accordance with the change of the wind direction during the time period of the stoppage of power generation.

12. The wind farm according to any of claim 1 to claim 10, wherein the control unit (40) calculates the yaw angle of the first wind power generation apparatuses before the stoppage of power generation so that the

**EP 3 290 690 A1**

generated electric energy of the wind farm (100) becomes the maximum in response to the average values or mode values of the wind direction and wind speed during the time period of the stoppage of power generation, wherein the average values and mode values are determined using the predicted values of the wind direction and wind speed obtained from weather forecast information.

13. A control method for controlling a wind farm (100) including a plurality of wind power generation apparatuses (10) each of which has: blades that rotate on receiving a wind; a nacelle that supports the blades to make the blades rotatable; and a tower that supports the nacelle to make the nacelle rotatable in its yaw movement,
wherein the control method is a method in which, in consideration of an effect on the attenuation of a wind that is received by second wind power generation apparatuses located on the leeward side of first wind power generation apparatuses that are stopping power generation using disposition information showing relations among the plurality of wind power generation apparatuses (10), design information and wind condition information about the plurality of wind power generation apparatuses (10), the yaw angle designation value of the first wind power generation apparatuses or the yaw angle designation value of the second wind power generation apparatuses is determined when electric power generation is stopped so that the generated electric energy of the wind farm (100) becomes large.

# FIG. 1

WIND
20

10  20a  10a  20b  10c      10d      100

11a

11b

20c    20d

3    10b  10e    4

# FIG. 2 (a)

WIND
20

10a    10c

10m/s

6m/s

WIND SPEED

# FIG. 2 (b)

WIND
20

10m/s

WIND SPEED

10a

8m/s

10c

# FIG. 3

30

WIND DIRECTION
/WIND SPEED
MEASUREMENT
VALUES

YAW ANGLE
MEASUREMENT
VALUE

DISPOSITION
INFORMATION

DESIGN
INFORMATION

31

LEEWARD
EFFECT
CALCULATION
UNIT

32

OPTIMAL
YAW ANGLE
DETERMINATION
UNIT

YAW ANGLE
DESIGNATION
VALUE

STOPPAGE
SCHEDULE
INFORMATION

FIG. 4 (a)

FIG. 4 (b)

# FIG. 5

| WIND DIRECTION | WIND SPEED | | |
|---|---|---|---|
| | ~5m/s | 5m/s~8m/s | 8m/s~ |
| N | 15 | 15 | 0 |
| NNE | 45 | 45 | 22.5 |
| NE | 75 | 75 | 45 |
| | | | |
| WWN | 315 | 315 | 292.5 |
| NW | 337.5 | 337.5 | 315 |
| NNW | 0 | 0 | 337.5 |

# FIG. 6

START

READ DISPOSITION INFORMATION & DESIGN INFORMATION ← DISPOSITION INFORMATION, DESIGN INFORMATION

READ WIND DIRECTION/WIND SPEED MEASUREMENT VALUES ← MEASUREMENT VALUES OF WIND DIRECTION, WIND SPEED, & YAW ANGLE

CALCULATE POSITIONAL RELATION WITH WIND POWER GENERATION APPARATUS ON LEEWARD SIDE

CALCULATE YAW ANGLE GIVING MINIMAL PROJECTION AREA

DESIGNATE YAW ANGLE → WIND POWER GENERATION APPARATUS

# FIG. 7

# FIG. 8

# FIG. 9

MAINTENANCE PERIOD

WAITING TIME | WORK TIME | WAITING TIME

WIND DIRECTION

YAW ANGLE

# FIG. 10

PREDICTED VALUE

MAINTENANCE PERIOD

WIND DIRECTION

YAW ANGLE

← AVERAGE VALUE

# FIG. 11

30

31    32

WIND DIRECTION
/WIND SPEED
MEASUREMENT
VALUES

YAW ANGLE
MEASUREMENT
VALUE

DISPOSITION
INFORMATION

DESIGN
INFORMATION

LEEWARD
EFFECT
CALCULATION
UNIT

OPTIMAL
YAW ANGLE
DETERMINATION
UNIT

YAW ANGLE
DESIGNATION
VALUE

OPTIMAL PITCH
ANGLE
DETERMINATION
UNIT

PITCH
ANGLE
DESIGNATION
VALUE

STOPPAGE SCHEDULE
INFORMATION

33

# FIG. 12 (a)

GENERATED ELECTRIC ENERGY(%)
LOAD FATIGUE(%)

100

GENERATED
ELECTRIC
ENERGY

LOAD
FATIGUE

17

# FIG. 12 (b)

Europäisches
Patentamt

European
Patent Office

Office européen
des brevets

## EUROPEAN SEARCH REPORT

Application Number

EP 17 18 6656

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | P.M.O. GEBRAAD ET AL: "Wind turbine wake estimation and control using FLORIDyn, a control-oriented dynamic wind plant model", 2015 AMERICAN CONTROL CONFERENCE (ACC), 1 July 2015 (2015-07-01), pages 1702-1708, XP055413503, DOI: 10.1109/ACC.2015.7170978 ISBN: 978-1-4799-8684-2 * Sections II, III and IV; figures 5, 6 * | 1-13 | INV. F03D7/02 F03D7/04 |
| X | EP 2 696 067 A2 (GEN ELECTRIC [US]) 12 February 2014 (2014-02-12) * paragraphs [0004] - [0008], [0038] - [0063], [0078] - [0091] * | 1-13 | |
| A,D | WO 2015/136687 A1 (HITACHI LTD [JP]) 17 September 2015 (2015-09-17) * the whole document * & EP 3 159 537 A1 (HITACHI LTD [JP]) 26 April 2017 (2017-04-26) * the whole document * | 1-13 | |

**TECHNICAL FIELDS SEARCHED (IPC)**

F03D

The present search report has been drawn up for all claims

| Place of search | Date of completion of the search | Examiner |
|---|---|---|
| The Hague | 10 January 2018 | Libeaut, Laurent |

EPO FORM 1503 03.82 (P04C01)

# EP 3 290 690 A1

## ANNEX TO THE EUROPEAN SEARCH REPORT
## ON EUROPEAN PATENT APPLICATION NO.

EP 17 18 6656

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2018

| Patent document cited in search report | | Publication date | Patent family member(s) | | Publication date |
|---|---|---|---|---|---|
| EP 2696067 | A2 | 12-02-2014 | EP       2696067 | A2 | 12-02-2014 |
|  |  |  | US   2014037447 | A1 | 06-02-2014 |
| WO 2015136687 | A1 | 17-09-2015 | EP       3159537 | A1 | 26-04-2017 |
|  |  |  | JP  WO2015136687 | A1 | 06-04-2017 |
|  |  |  | WO   2015136687 | A1 | 17-09-2015 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015136687 A